# EUROPEAN PATENT SPECIFICATION

(11) **EP 3 199 785 B1**
(45) Date of publication and mention of the grant of the patent: **28.04.2021**
(21) Application number: 17153415.9
(22) Date of filing: 26.01.2017
(51) Int. Cl.: F02D 9/04, F02D 9/10, F16K 1/20

(54) **THROTTLE VALVE AND DUCT FOR THE NOISE REDUCTION OF THE EXHAUST GASES OF AN INTERNAL COMBUSTION ENGINE OF A VEHICLE**
DROSSELKLAPPE UND LEITUNG ZUR RAUSCHVERMINDERUNG VON ABGASEN EINER BRENNKRAFTMASCHINE EINES FAHRZEUGS
SOUPAPE D'ÉTRANGLEMENT ET CONDUIT POUR LA RÉDUCTION DE BRUIT DES GAZ D'ÉCHAPPEMENT D'UN MOTEUR À COMBUSTION INTERNE D'UN VÉHICULE

(30) Priority: 26.01.2016 IT UB20160332
(43) Date of publication of application: 02.08.2017
(73) Proprietor: ANSA TECH S.r.l., 41034 Finale Emilia (IT)
(72) Inventor: MORELLI, Paolo, 41034 FINALE EMILIA (IT); SGARBI, Davide, 41034 FINALE EMILIA (IT); MANTOVANI, Gino, 41034 FINALE EMILIA (IT); PIAZZI, Stefano, 41034 FINALE EMILIA (IT); ZINI, Walter, 41034 Finale Emilia (IT)
(74) Representative: Cataldi, Giulia

(56) References cited:
- WO-A1-2013/115434
- DE-C1- 4 439 432
- JP-A- 2007 211 723
- JP-B2- 3 148 398
- US-A- 3 244 194
- US-A- 5 822 984
- US-A1- 2008 237 521

## Description

### Technical field

The present invention relates to a throttle valve and a pipe for the noise reduction of the exhaust gases of an internal combustion engine of a vehicle.

### Prior art

In vehicles, it is known to arrange along the exhaust pipe a throttle valve of the exhaust gases to reduce the noise emitted by an internal combustion engine arranged upstream. Namely, in vehicles it is known to install a silencer, in some cases comprising a throttle valve arranged along the exhaust pipe.

As already known, throttle valves are generally throttle valves comprising a valve body and a throttle wall.

The valve body is substantially tubular, has a longitudinal axis and a through inner cavity, which defines a passage section for the exhaust gases.

The throttle wall is mounted in the inner cavity and can rotate about a transverse rotation axis, in particular perpendicular to the longitudinal axis of the valve body.

In particular, in throttle valves of known type, the rotation axis is diametrical with respect to the throttle wall. Therefore, in order to ensure the complete interruption of the exhaust gas flow when the throttle wall is in the closing position, the rotation axis of the throttle wall must be arranged in a central position, in particular incident to the longitudinal axis of the valve body.

In other words, since the rotation axis is diametrical with respect to the throttle wall, the throttle wall is necessarily arranged at the centre of the passage section.

However, due to strong thermal expansions, also involving the valve body, induced by the exhaust gases coming from the internal combustion engine, a disadvantage of these throttle walls is that in use they may make contact and interfere with the valve body. Therefore, the throttle valves of known type have a high probability of seizure.

In other words, the throttle valves of known type prevent the free rotation of the throttle wall with respect to the valve body due to the thermal expansion of the components. Furthermore, providing a clearance by assembling the throttle wall in the respective valve body is a known way to solve the aforesaid problem. Therefore, modifying the geometric tolerances between the valve body and the throttle wall to increase the clearance between them is already known. However, increasing the clearance involves an incomplete closing of the passage section, with a consequent significant leakage of the exhaust gases through the throttle valve. It follows that these throttle valves give a scarcely effective noise reduction.

It is also known, by WO2013115434 or US2008237521, to provide a throttle valve comprising a tubular body and a shutter having a hinge which is connected to the sidewall of the tubular body. Also for these known types of throttle it is provided a clearance between the tubular body and the shutter. As already indicated above, the clearance involves an incomplete closing of the passage section, with a consequent significant leakage of the exhaust gases through the throttle valve. It follows that these throttle valves give a scarcely effective noise reduction.

US5822984A discloses an other example of a throttle valve.

Therefore, since the international regulations about the noise emitted by a vehicle are increasingly stringent, it is clear that the above solutions are no longer applicable.

### Description of the invention

The object of the present invention is therefore to provide a throttle valve for the noise reduction of the exhaust gases of an internal combustion engine of a vehicle, which is free from the aforesaid drawbacks and which is easy and inexpensive to manufacture.

Therefore, the present invention provides a throttle valve and a pipe for the exhaust gases as claimed in the appended claims.

### Brief description of the drawings

The present invention will now be described with reference to the accompanying drawings showing a non-limiting embodiment, wherein:
- Figure 1 is a perspective and schematic view of a throttle valve according to the present invention;
- Figure 2 is a longitudinal section of the throttle valve of Figure 1 in a first operating configuration;
- Figure 3 is similar to Figure 2 and shows the throttle valve according to the present invention in a second operating configuration; and
- Figure 4 is a section along the line IV-IV of Figure 2.

### Preferred embodiments of the invention

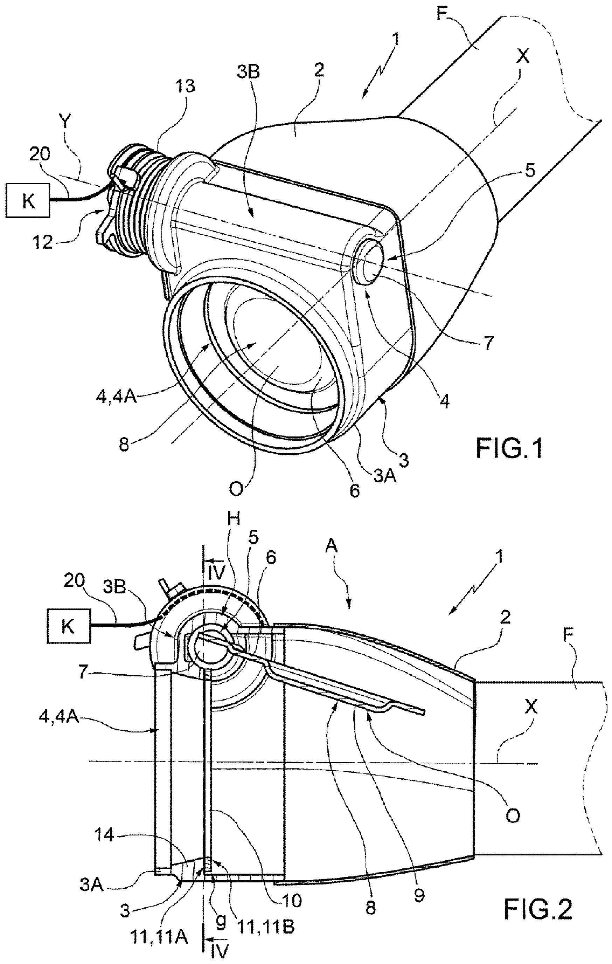

In Figure 1, the reference number 1 indicates in its entirety a throttle valve of the exhaust gases of an internal combustion engine of a vehicle. The valve 1 is configured in a known manner to be connected to an exhaust pipe F of an internal combustion engine and comprises a gas outlet body 2.

As shown in the figures, the valve 1 comprises a substantially tubular valve body 3 having a longitudinal axis X and at least one side wall 3A, which laterally delimits an inner cavity 4. The inner cavity 4 is, in use, a passage section 4A for the exhaust gases.

According to the invention, the valve 1 comprises a hinge H close to the side wall 3A. The hinge H is connected to the side wall 3A. In particular, the valve body 3 comprises a support 3B, which cooperates with said side wall 3A for laterally delimiting the inner cavity 4. The support 3b laterally overlooks the inner cavity 4. The valve body 3 also comprises a hinge pin 7 housed in the support 3B, as it will be better explained hereinafter.

According to the invention, the hinge pin 7 can rotate, as it will be better explained hereinafter, in said support 3b to form the hinge H. As shown, the hinge H is out of line relative to the longitudinal axis X.

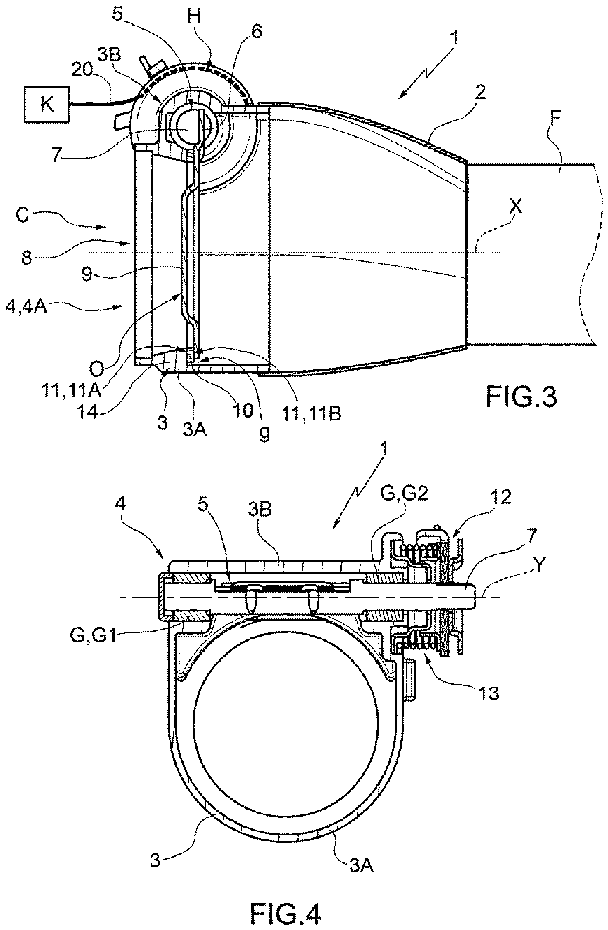

According to the invention, the valve 1 comprises a shutter O movably mounted in the inner cavity 4. According to the invention, the shutter O is connected to the hinge H and can rotate about a rotation axis Y. According to the invention, the shutter O can be operated by an external actuator K, as it will be better explained hereinafter. The shutter O is configured to be selectively arranged in an opening position A (shown in Figure 2), in a closing position C (shown in Figure 3) or in any intermediate position between the opening position A and the closing position C.

According to the invention, the inner cavity 4 defines in a known manner the passage section 4A of the exhaust gases.

Advantageously, the support 3b of the hinge H has a cylindrical seat 5 provided with the rotation axis Y.

Preferably, the rotation axis Y of the hinge H is skew with respect to the longitudinal axis X.

The hinge pin 7 is inserted in the seat 5 and is coaxial with the rotation axis Y. The hinge pin 7 can rotate about the rotation axis Y. The hinge H further comprises annular gaskets G, which are fitted in a known manner to the ends of the hinge pin 7. The annular gaskets G are configured to allow the rotation of the hinge pin 7 with respect to the support 3B and to prevent any undesirable leakage of the exhaust gases through the hinge H.

As shown in the figures, the seat 5 laterally overlooks the inner cavity 4, i.e. is out of line. In other words, the seat 5 housing the hinge pin 7 is arranged at the periphery of the inner cavity 4.

As shown in the figures, the shutter O comprises a throttle wall 6.

Advantageously, the throttle wall 6 is flat, i.e. it has a completely flat surface 8 exposed to the exhaust gases. Advantageously, the throttle wall 6 is shaped so that at least a central portion of the surface 8 exposed to the exhaust gases has a depression 9 for better closing the inner cavity 4.

As shown in the figures, the throttle wall 6 is connected to the hinge pin 7 to rotate therewith about the rotation axis Y. In other words, the throttle wall 6 is integral with the hinge pin 7 and is configured to be arranged selectively and depending on how the hinge pin 7 rotates about the rotation axis Y:
- in the closing position C (shown in Figure 3) to prevent any passage of the exhaust gases;
- in the opening position A (shown in Figure 2) to allow the complete passage of the exhaust gases;
- in an intermediate position (not shown) to modulate the exhaust gas outlet flow.

In the closing position C, the throttle wall 6 acts as a barrier and intercepts the exhaust gases, thus greatly reducing the noise. On the other hand, in the opening position A, the throttle wall 6 frees the passage section 4A, thus allowing the passage of the exhaust gases. Advantageously, when the throttle wall 6 is in the opening position A, the load losses are minimal.

According to the invention, to guarantee a complete closing of the inner cavity 4, the throttle wall 6 and the inner cavity 4 have a substantially complementary shape. According to the invention, the throttle wall 6 has a size such that there is a clearance g between the throttle wall 6 and the side wall 3A when the throttle wall 6 is in the closing position C. According to the invention, the clearance g prevents the throttle wall 6 from rubbing or jamming against the side wall 3A in use, in particular due to the thermal expansions generated by the heat of the exhaust gases. The size of the clearance g is a function of the size and the material of the throttle wall 6 and of the side wall 3A and of the maximum operating temperature. The size of the clearance g is defined in a known manner according to the known technique of dimensioning the couplings with a clearance g between mechanical components.

As shown in Figures 2 and 3, the valve body 3 comprises an annular abutment 14 radially protruding in the inner cavity 4. Advantageously, the radial extension of the annular abutment 14 is equal to or greater than the radial extension of the clearance g between the throttle wall 6 and the side wall 3A.

According to the invention, the valve 1 comprises a sealing gasket 10 to ensure the sealing of the passage section 4A when the throttle wall 6 is in the closing position C. Preferably, the gasket 10 is of the anti-extrusion ring type. The gasket 10 has an annular shape and a rectangular section. In particular, the gasket 10 has a pair of flat and mutually opposite abutment surfaces 11. As shown in Figures 2 and 3, the gasket 10 is inserted in the inner cavity 4. In particular, the gasket 10 is arranged in the inner cavity 4 so that the abutment surface 11A is in contact with the annular abutment 14, while the opposite abutment surface 11B is configured to be in contact with the throttle wall 6 when it is in the closing position C.

As shown in Figure 3, when the throttle wall 6 is in the closing position C, the gasket 10 is interposed between the annular abutment 14 and the throttle wall 6. Advantageously, the radial extension of the gasket 10 is equal to or greater than the radial extension of the clearance g between the throttle wall 6 and the side wall 3A.

Advantageously, the gasket 10 compensates for the assembling geometric tolerances. The gasket 10, in cooperation with the throttle wall 6, ensures the tight sealing of the valve 1 under any condition of use, despite the presence of the clearance g between the side wall 3A and the throttle wall 6. In other words, the gasket 10 allows the throttle wall 6 to have a suitable abutment for closing the valve 1 under any condition of use.

Furthermore, the gasket 10 damps any possible closing noise produced when the throttle wall 6 and the valve body 3 make contact by closing the inner cavity 4.

As shown in the figures, the valve 1 comprises a pulley 12 connected in a known manner to one end of the hinge pin 7, which is configured to be operated by an external actuator K. For example, the pulley 12 can be actuated in a known way through a cable 20 connected to the external actuator K.

The valve 1 further comprises a torsion spring 13 fitted around the hinge pin 7. Advantageously, the spring 13 is close to the pulley 12, at one end of the hinge pin 7. In particular, the spring 13 is configured to maintain the hinge pin 7 (and consequently also the throttle wall 6 integral with the hinge pin 7) in a rest position, i.e. in the closing position C, when the pulley 12 is not operated.

The pulley 12 is configured to operate the throttle wall 6 through the hinge pin 7, to arrange the throttle wall 6 selectively in the opening position A, in the closing position C or in an intermediate position.

It is clear that the size, the shape and the proportions of the components of the valve 1 (in particular of the gas outlet body 2, of the support 3B, of the throttle wall 6, of the side wall 3A and of the gasket 10) can vary with respect to what shown in the figures in order to suit any exhaust system of an internal combustion engine.

In use, the valve 1 is installed along an exhaust pipe F of a vehicle to reduce the noise of the exhaust gases emitted by an internal combustion engine.

When opening the valve 1, the external actuator K operates in a known manner the pulley 12. Consequently, the pulley 12 rotates the hinge pin 7 and the throttle wall 6.

Therefore, an operator acting on the pulley 12 can selectively manage the opening and/or closing of the valve 1.

When the throttle wall 6 is in the closing position C, the gasket 10 ensures a perfect sealing of the valve 1, thus preventing any type of leakage of exhaust gases between the throttle wall 6 and the side wall 3A. Moreover, the presence of the clearance g between the throttle wall 6 and the side wall 3A ensures the perfect operation of the valve 1 at any temperature, in particular prevents the seizing of the valve 1 due to thermal expansions caused by the heat transmitted by the exhaust gases.

The valve 1 of the aforesaid type therefore allows an optimum compensation of thermal expansions and an optimum exhaust gas seal under any condition of use.

Advantageously, the valve 1 of the aforesaid type is easy and inexpensive to manufacture.

## Claims

1. A throttle valve for noise reduction of exhaust gases comprising a tubular valve body (3) with a longitudinal axis (X) and having at least one side wall (3A) which laterally delimits an inner cavity (4); wherein said inner cavity (4) is, in use, a passage section (4A) for the exhaust gases of an internal combustion engine of a vehicle; the throttle valve (1) is configured to be connected to an exhaust pipe (F) of an internal combustion engine; the throttle valve (1) comprising a hinge (H), which has a rotation axis (Y) and is connected to the side wall (3A) and a shutter (O), which rotates in said inner cavity (4) about the rotation axis (Y) of said hinge (H); wherein the valve body (3) has an annular abutment (14) radially protruding in the inner cavity (4); the throttle valve (1) comprising a gasket (10), in particular an anti-extrusion ring, which is fitted in said inner cavity (4) and is axially mounted against said annular abutment (14); wherein the shutter (O) is configured to be arranged, in use, in abutment against said gasket (10) when it is in a closing position (C); wherein said gasket (10) has an annular shape and a rectangular section with a pair of flat and mutually opposite abutment surfaces (11A, 11B); wherein said hinge (H) comprises:
- a support (3B) having a hollow seat (5), which has the rotation axis (Y); and
- a hinge pin (7), which is housed in said seat (5) and rotates about the rotation axis (Y);
wherein said shutter (O) is connected to said hinge pin (7) to rotate therewith about the rotation axis (Y) in an integral manner; wherein the hinge pin (7) is operable by an external actuator (K); wherein the shutter (O) comprises a throttle wall (6); wherein the shape of said throttle wall (6) is complementary to the shape of said inner cavity (4); wherein the size of the throttle wall (6) is such to provide a clearance (g) between the throttle wall (6) and the side wall (3C), when the throttle wall (6) is in the closing position (C); the valve being **characterized in that** the gasket (10) is arranged in the inner cavity (4) so that the abutment surface (11A) is in contact with the annular abutment (14), while the opposite abutment surface (11B) is configured to be in contact with the throttle wall (6) when it is in the closing position (C), and **in that** the valve comprises at an end of the hinge pin (7) a pulley (12) and a spring (13); wherein the pulley (12) is configured to be operated by said external actuator (28); and wherein the pulley (12) cooperates with the spring (13) to cause the opening and/or the closing of the passage section (4A) through the shutter (0).

2. A valve according to claim 1, wherein said seat (5) is out of line relative to the longitudinal axis (X); in particular, the rotation axis (Y) is substantially skew relative to said longitudinal axis (X).

3. A valve according to any one of the preceding claims, wherein the shutter (O) is configured to be selectively arranged:
- in the closing position (C), in which the passage section (4A) is closed and, in use, intercepts the exhaust gases, thus reducing the noise; or
- in an opening position (A), in which the passage section (4A) is free and, in use, allows the exhaust gases to flow through.

4. A valve according to any of the preceding claims, wherein the radial extension of said gasket (10) is equal to or greater than the radial extension of said clearance (g).

5. A valve according to any of the preceding claims, wherein the throttle wall (6) is shaped so as to have a depression (9) at its own central portion of a surface (8) exposed to the exhaust gases.

6. An exhaust pipe for a vehicle with an internal combustion engine **characterized by** comprising a throttle valve (1) according to any one of claims 1 to 5.

## Patentansprüche

1. Drosselklappe zur Geräuschverminderung von Abgasen, die einen röhrenförmigen Klappenkörper (3) mit einer Längsachse (X) umfasst und mindestens eine Seitenwand (3A) aufweist, die einen inneren Hohlraum (4) seitlich begrenzt; wobei der innere Hohlraum (4) im Einsatz ein Durchgangsabschnitt (4A) für die Abgase einer Brennkraftmaschine eines Fahrzeugs ist; wobei die Drosselklappe (1) ausgestaltet ist, mit einer Abgasleitung (F) einer Brennkraftmaschine verbunden zu sein; wobei die Drosselklappe (1) ein Scharnier (H) umfasst, das eine Drehachse (Y) aufweist und mit der Seitenwand (3A) und einem Verschluss (O) verbunden ist, der sich in dem inneren Hohlraum (4) um die Drehachse (Y) des Scharniers (H) dreht; wobei der Klappenkörper (3) einen ringförmigen Anschlag (14) aufweist, der radial in den inneren Hohlraum (4) vorsteht; wobei die Drosselklappe (1) eine Dichtung (10), insbesondere einen Antiextrusionsring, umfasst, der in den inneren Hohlraum (4) eingepasst ist und axial gegen den ringförmigen Anschlag (14) montiert ist; wobei der Verschluss (O) ausgestaltet ist, im Einsatz in Anlage an die Dichtung (10) angeordnet zu sein, wenn er sich in einer Schließstellung (C) befindet; wobei die Dichtung (10) eine Ringform und einen rechteckigen Abschnitt mit einem Paar von flachen und einander gegenüberliegenden Anschlagflächen (11A, 11B) aufweist; wobei das Scharnier (H) Folgendes umfasst:
- eine Stütze (3B), die einen hohlen Sitz (5) aufweist, der die Drehachse (Y) aufweist; und
- einen Scharnierstift (7), der in dem Sitz (5) untergebracht ist und sich um die Drehachse (Y) dreht;
wobei der Verschluss (O) mit dem Scharnierstift (7) verbunden ist, sodass er sich damit einstückig um die Drehachse (Y) dreht; wobei der Scharnierstift (7) mittels eines externen Aktuators (K) betätigbar ist;
wobei der Verschluss (O) eine Drosselwand (6) umfasst; wobei die Form der Drosselwand (6) komplementär zu der Form des inneren Hohlraums (4) ist; wobei die Größe der Drosselwand (6) derart ist, dass ein Abstand (g) zwischen der Drosselwand (6) und der Seitenwand (3C) bereitgestellt ist, wenn die Drosselwand (6) sich in der Verschlussstellung (C) befindet; wobei die Klappe **dadurch gekennzeichnet ist, dass** die Dichtung (10) in dem inneren Hohlraum (4) angeordnet ist, sodass die Anschlagfläche (11A) in Kontakt mit dem ringförmigen Anschlag (14) ist, während die gegenüberliegende Anschlagfläche (11B) ausgestaltet ist, in Kontakt mit der Drosselwand (6) zu sein, wenn sie sich in der Verschlussstellung (C) befindet, und dadurch, dass die Klappe an einem Ende des Scharnierstifts (7) einen Seilzug (12) und eine Feder (13) umfasst; wobei der Seilzug (12) ausgestaltet ist, mittels des externen Aktuators (28) betätigt zu werden; und wobei der Seilzug (12) mit der Feder (13) zusammenwirkt, um durch den Verschluss (O) das Öffnen und/oder das Schließen des Durchgangsabschnitts (4A) zu bewirken.

2. Klappe nach Anspruch 1, wobei der Sitz (5) relativ zur Längsachse (X) versetzt ist; wobei insbesondere die Drehachse (Y) im Wesentlichen schräg relativ zu der Längsachse (X) ist.

3. Klappe nach einem der vorhergehenden Ansprüche, wobei der Verschluss (O) ausgestaltet ist, wahlweise folgendermaßen angeordnet zu sein:
- in der Verschlussstellung (C), in der der Durchgangsabschnitt (4A) verschlossen ist, und im Einsatz Abgase abfängt, wodurch das Rauschen vermindert wird;
oder
- in einer Öffnungsstellung (A), in der der Durchgangsabschnitt (4A) frei ist und im Einsatz den Abgasen erlaubt, hindurchzuströmen.

4. Klappe nach einem der vorhergehenden Ansprüche, wobei die radiale Erstreckung der Dichtung (10) gleich oder größer als die radiale Erstreckung des Abstands (g) ist.

5. Klappe nach einem der vorhergehenden Ansprüche, wobei die Drosselwand (6) derart geformt ist, dass sie eine Vertiefung (9) an ihrem eigenen mittleren Abschnitt einer Fläche (8) aufweist, die den Abgasen ausgesetzt ist.

6. Abgasleitung für ein Fahrzeug mit einer Brennkraftmaschine, **gekennzeichnet durch** Umfassen einer Drosselklappe (1) nach einem der Ansprüche 1 bis 5.

## Revendications

1. Vanne d'étranglement pour une réduction de bruit de gaz d'échappement comprenant un corps de soupape (3) tubulaire avec un axe longitudinal (X) et ayant au moins une paroi latérale (3A) qui délimite latéralement une cavité intérieure (4) ; dans lequel ladite cavité intérieure (4) est, en utilisation, une section de passage (4A) pour les gaz d'échappement d'un moteur à combustion interne d'un véhicule ; la vanne d'étranglement (1) est configurée pour être reliée à un tuyau d'échappement (F) d'un moteur à combustion interne ; la vanne d'étranglement (1) comprenant une charnière (H), qui a un axe de rotation (Y) et est reliée à la paroi latérale (3A) et à un obturateur (O), qui tourne dans ladite cavité intérieure (4) autour de l'axe de rotation (Y) de ladite charnière (H) ; dans lequel le corps de soupape (3) a une butée annulaire (14) faisant saillie radialement dans la cavité intérieure (4) ; la vanne d'étranglement (1) comprenant un joint (10), en particulier une bague anti-extrusion, qui est placé dans ladite cavité intérieure (4) et est monté axialement contre ladite butée annulaire (14); dans lequel l'obturateur (O) est configuré pour être agencé, en utilisation, en butée contre ledit joint (10) lorsqu'il est dans une position de fermeture (C) ; dans lequel ledit joint (10) a une forme annulaire et une section rectangulaire avec une paire de surfaces de butée (11A, 11B) plates et mutuellement opposées; dans lequel ladite charnière (H) comprend :
- un support (3B) ayant un siège (5) creux, qui a l'axe de rotation (Y) ; et
- une goupille de charnière (7), qui est logée dans ledit siège (5) et tourne autour de l'axe de rotation (Y) ;
dans lequel ledit obturateur (O) est relié à ladite goupille de charnière (7) pour tourner avec celle-ci autour de l'axe de rotation (Y) de manière intégrale ; dans lequel la goupille de charnière (7) peut être mise en fonctionnement par un actionneur externe (K) ;
dans lequel l'obturateur (O) comprend une paroi d'étranglement (6) ;
dans lequel la forme de ladite paroi d'étranglement (6) est complémentaire de la forme de ladite cavité intérieure (4) ;
dans lequel la taille de la paroi d'étranglement (6) est telle qu'un jeu (g) est permis entre la paroi d'étranglement (6) et la paroi latérale (3C), lorsque la paroi d'étranglement (6) est dans la position de fermeture (C) ; la vanne étant **caractérisée en ce que**
le joint (10) est agencé dans la cavité intérieure (4) de façon à ce que la surface de butée (11A) soit en contact avec la butée annulaire (14), tandis que la surface de butée (11B) opposée est configurée pour être en contact avec la paroi d'étranglement (6) lorsqu'elle est dans la position de fermeture (C),
et **en ce que** la soupape comprend à une extrémité de la goupille de charnière (7) une poulie (12) et un ressort (13); dans lequel la poulie (12) est configurée pour être mise en fonctionnement par ledit actionneur externe (28) ; et dans lequel la poulie (12) coopère avec le ressort (13) pour provoquer l'ouverture et/ou la fermeture de la section de passage (4A) par l'intermédiaire de l'obturateur (O).

2. Vanne selon la revendication 1, dans laquelle ledit siège (5) est désaxé par rapport à l'axe longitudinal (X) ; en particulier, l'axe de rotation (Y) est sensiblement oblique par rapport audit axe longitudinal (X).

3. Vanne selon l'une quelconque des revendications précédentes, dans laquelle l'obturateur (O) est configuré pour être agencé de manière sélective :
- dans la position de fermeture (C), dans laquelle la section de passage (4A) est fermée et, en utilisation, intercepte les gaz d'échappement, réduisant ainsi le bruit ; ou
- dans une position d'ouverture (A), dans laquelle la section de passage (4A) est libre et, en utilisation, permet aux gaz d'échappement de s'écouler à travers celle-ci.

4. Vanne selon l'une quelconque des revendications précédentes, dans laquelle l'extension radiale dudit joint (10) est égale à ou est plus grande que l'extension radiale dudit jeu (g).

5. Vanne selon l'une quelconque des revendications précédentes, dans laquelle la paroi d'étranglement (6) est formée de façon à avoir une dépression (9) au niveau de sa propre portion centrale d'une surface (8) exposée aux gaz d'échappement.

6. Tuyau d'échappement pour un véhicule avec un moteur à combustion interne **caractérisé en ce qu'**il comprend une vanne d'étranglement (1) selon l'une quelconque des revendications 1 à 5.
